Europäisches Patentamt

European Patent Office

Office européen des brevets

(19)

(11) Veröffentlichungsnummer: **0 255 506**
**B1**

(12) **EUROPÄISCHE PATENTSCHRIFT**

(45) Veröffentlichungstag der Patentschrift:
07.03.90

(21) Anmeldenummer: 87890139.6

(22) Anmeldetag: **19.06.87**

(51) Int. Cl.⁴: **B60C 27/08**, B60C 27/00

(54) Greifglied für Reifenschutz und/oder Geländeketten.

(30) Priorität: **22.07.86 AT 1976/86**

(43) Veröffentlichungstag der Anmeldung:
**03.02.88 Patentblatt 88/5**

(45) Bekanntmachung des Hinweises auf die Patenterteilung:
**07.03.90 Patentblatt 90/10**

(84) Benannte Vertragsstaaten:
**CH DE IT LI SE**

(56) Entgegenhaltungen:
**AT-B- 325 438**
**AU-B- 447 426**
**CH-A- 546 654**
**DE-B- 1 780 717**

(73) Patentinhaber: **Steirische Kettenfabriken Pengg-Walenta KG, Theodor-Körner Strasse 59, A-8020 Graz(AT)**

(72) Erfinder: **Jeindl, Ferdinand, Dipl.-Ing., Körblergasse 59/3, A-8010 Graz(AT)**

(74) Vertreter: **Matschnig, Franz, Dipl.-Ing., Siebensterngasse 54 Postfach 452, A-1071 Wien(AT)**

ACTORUM AG

# Beschreibung

Die Erfindung bezieht sich auf ein einteiliges Ketten-Greifglied für Reifenschutz- und/oder Geländeketten mit an der Bodenlaufseite vorgesehenen stollenartigen Erhebungen zur Verbesserung der Greifwirkung.

Bei Reifenschutz- und auch bei Geländeketten sind einzelne Greifglieder durch verschweißte Ringe miteinander zu einem Kettennetz zusammengefaßt, das beispielsweise aus Vier- oder Sechsecken aufgebaut ist. Eine Reifenschutzkette mit Vierecknetz ist z.B. in der AT-B 354 875 beschrieben. Die Greifglieder sollen bei Reifenschutzketten den Reifen vor Beschädigung z.B. durch spitzes Gestein schützen und andererseits eine gute Greifwirkung zeigen. Daher ist die Bodenlauffläche der Greifglieder oft mit Erhebungen versehen. Aus der DE-A 1 780 717 ist z.B. ein gattungsgemäßes Greifglied bekannt geworden, an dessen Bodenlauffläche in Längsrichtung in Abstand voneinander angeordnete Querstollen vorgesehen sind.

Reifenketten mit Greifgliedern werden oft unter ungünstigen Bedingungen, beispielsweise auf hartem Gestein mit losem Quarzsand verwendet. Das Einlaufen der Greifglieder und der Verbindungsringe erfolgt dennoch verhältnismäßig langsam im Vergleich zum Verschleiß der Greifglieder. Die Erhebungen, z.B. Stollen, werden während der Einsatzzeit schließlich soweit abgefahren, bis nur noch eine durchgehende, glatte Lauffläche des Gliedes vorliegt, die dann nicht mehr die erwünschte Greifwirkung aufweist. Die nutzbare Kettenlebensdauer ist somit im wesentlichen durch die Standzeit der Greifglieder beschränkt.

Ziel der Erfindung ist es, ein Greifglied zu schaffen, das ohne untragbare Erhöhung des Gliedvolumens – auch nach langer Einsatzzeit noch gute Greifwirkungen zeigt, ohne daß es zu einer Verminderung der Lebensdauer der Kette kommt.

Dieses Ziel läßt sich mit einem Greifglied der eingangs genannten Art erreichen, bei welchem erfindungsgemäß in einem Abstand von der Bodenlauffläche im Gliedkörper seitlich offene, im wesentlichen parallel zur Bodenlauffläche in den Fußbereichen der Erhebungen verlaufende Bohrungen vorgesehen sind.

Wenn die Erhebungen des Greifgliedes weitgehend abgefahren sind, je nach Lage der Bohrungen z.B. bei 80 bis 90% Verschleiß, treten die Bohrungen hervor, wodurch sich wieder neue Greifkanten ergeben. Wiewohl durch die Bohrungen Gliedvolumen verlorengeht, läßt sich bei Greifgliedern nach der Erfindung ohne Erhöhung des Gliedvolumens eine Steigerung der Gliedlebensdauer und damit auch der Kettenlebensdauer erreichen, da durch die seitlichen Bohrungen die gehärtete Oberfläche im Verschleißbereich wesentlich erhöht wird.

In Zusammenhang mit Greifgliedern, die auswechselbare Verschleißeinsätze aufweisen (z.B. AU-B 447 426, CH-A 546 654 oder AT-B 325 438), ist es auch bekannt geworden, im Gliedkörper Bohrungen vorzusehen. Derartige Bohrungen sind jedoch nicht mit jenen nach der Erfindung vergleichbar, da sie bei zusammengesetztem Glied ausgefüllt bzw. verschlossen sind und sie überdies nicht in den Fußbereichen der Erhebungen oder Stollen verlaufen. Natürlich ist auch die Zweckbestimmung solcher Bohrungen eine völlig andere.

Bei einem Greifglied mit an der Bodenlaufseite vorgesehenen, quer zu dem Glied und in Abstand voneinander angeordneten Stollen, die vorzugsweise symmetrisch zur Längs- und Quermittelebene des Gliedes liegen, ist es empfehlenswert, wenn die Bohrungen in Richtung der Stollen verlaufend in deren Fußbereich liegen.

Es hat sich hiebei als besonders zweckmäßig erwiesen, wenn jedem Stollen zwei Sackbohrungen zugeordnet sind. Bei einer solchen Ausführungsform wird die Festigkeit des Greifgliedes kaum verringert.

Weiters ist es empfehlenswert, wenn die Bohrungen im wesentlichen elliptischen Querschnitt aufweisen, da sich durch Wahl der Ellipsenhauptachsen die Greifwirkung und die Restlebensdauer beeinflussen lassen.

In diesem Zusammenhang ist es insbesondere empfehlenswert, wenn bei den Bohrungen, welche den mittleren Stollen zugeordnet sind, die Hauptachsen des elliptischen Querschnitts annähernd senkrecht zu den Bodenlaufflächen der Stollen verlaufen und die entsprechenden Achsen der den beiden äußeren Stollen zugeordneten Bohrungen nach außen, z.B. um 30°, geneigt sind.

Um die durch die Bohrungen entstehenden Festigkeitsverlust zu kompensieren, kann zwischen den Stollen ein Längssteg vorgesehen sein.

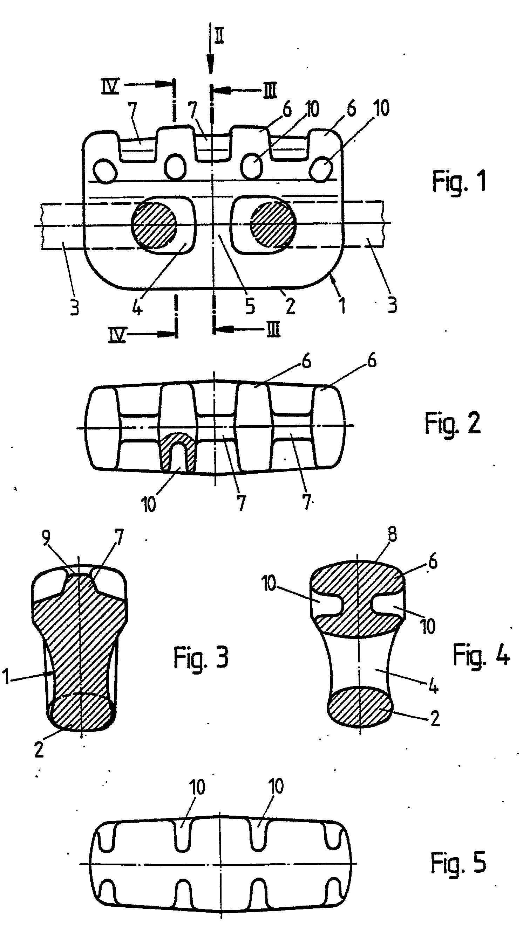

Es zeigen Fig. 1 ein erfindungsgemäßes Greifglied in Seitenansicht, Fig. 2 dieses Greifglied in Draufsicht (in Richtung des Pfeiles II der Fig. 1) und teilweise geschnitten, Fig. 3 einen Schnitt nach der Linie III-III der Fig. 1, Fig. 4 einen Schnitt nach der Linie IV-IV der Fig. 1 und Fig. 5 eine Draufsicht wie Fig. 2, jedoch nach langer Einsatzzeit und fortgeschrittenem Verschleiß der Stollen.

Gemäß Fig. 1 und 2 weist das Greifglied nach der Erfindung einen im wesentlichen plattenförmigen Gliedkörper 1 auf, der mit seiner Unterseite 2 auf der Lauffläche eines Reifens aufliegt. Strichliert angedeutete, verschweißte Verbindungsringe 3 bilden zusammen mit weiteren Gliedern ein Kettennetz, welches die Reifenauffläche vor Zerstörung, z.B. durch spitzes Gestein, schützt. Mit jedem Verbindungsring 3 können z.B. 4 oder 6 Greifglieder verbunden sein, sodaß sich ein Kettennetz 4-eckiger oder 6-eckiger Konfiguration ergibt. Für die Verbindungsringe 3 sind Aufnahmeöffnungen 4 vorgesehen, die durch einen Verstärkungs- und Trennsteg 5 getrennt sind. Der Steg 5 ist jedoch nicht zwingend erforderlich.

Um eine genügende Griffigkeit mit dem Untergrund zu erhalten, besitzt das Greifglied vier querverlaufende Stollen 6. Zur Er-höhung der Festigkeit und der Griffigkeit sind außerdem zwischen den Stollen 6 Längsstege 7 vorgesehen. Die Bodenlaufflächen 8 der Stollen 6 sind - ebenso wie die bei neuem Glied tiefer liegenden Bodenlaufflächen 9 der Längsstege 7 - im Querschnitt abgerundet, wie aus Fig. 3 und 4 hervorgeht. Die Längsrippen 7 sind meist zweckmäßig, sie können jedoch auch entfallen, sodaß der Raum zwischen den Stollen 6 frei bleibt.

Die hier gezeigte Ausführungsform besitzt vier Stollen 6, doch kann, entsprechend der Gliedgröße und den Einsatzbedingungen auch eine andere Anzahl von Stollen, beispielsweise drei, vorgesehen sein. Es ist aber empfehlenswert, das Greifglied sowohl zur Längs- als auch zur Quermittelebene symmetrisch auszubilden.

Im Fußbereich der Stollen 6, d.h. in jenem Bereich, in dem die Stollen 6 in den Gliedkörper übergehen, sind Querbohrungen 10 vorgesehen, die bei diesem Ausführungsbeispiel als Sachbohrungen ausgebildet sind, jedoch auch durchgehende Bohrungen sein könnten. Jede Querbohrung 10 liegt somit zum Teil im Gliedkörper 1, zum Teil in dem zugehörigen Stollen 6. Der Bohrungsquerschnitt ist zweckmäßigerweise etwa elliptisch, wobei die Hauptachsen bei den mittleren Bohrungen senkrecht zur Bodenlauffläche 8 verlaufen, bei den beiden äußeren Stollen jedoch nach außen, z.B. um 30°, geneigt sein können, um die äußeren Stollen nicht zu sehr zu schwächen. Das Greifglied besteht aus Stahl und ist vorzugsweise geschmiedet und vollständig oberflächengehärtet.

Mit fortschreitender Einsatzdauer der Reifenschutzkette werden die Stollen 6 eines Greifgliedes immer mehr abgefahren. Bevor es jedoch durch Verschleiß der Stollen zur Bildung einer durchgehenden, glatten Bodenlauffläche kommt, werden die Querbohrungen 10 freigelegt, sodaß sich wieder eine Strukturierung der Greifglied-Lauffläche ergibt. Dies ist in Fig. 5 veranschaulicht, wo ein Greifglied in Draufsicht dargestellt ist, dessen Stollen vollständig abgefahren sind. Dennoch bieten die gehärteten Kanten der freigelegten Bohrungen 10 eine gute Greifwirkung für den Rest der Lebensdauer.

Es versteht sich, daß die Erfindung auch auf Greifglieder anwendbar ist, die eine andere Oberflächenstrukturierung aufweisen. Wesentlich ist es, etwa in Höhe des Fußbereiches von Erhebungen, welche die Greifwirkung des Gliedes erhöhen, Bohrungen vorzusehen, die etwa parallel zur Bodenlauffläche verlaufen, sodaß bei fortschreitendem Verschleiß der Erhebungen schließlich die Bohrungen freigelegt werden, wodurch sich eine neue bzw. zusätzliche Strukturierung der Bodenlauffläche des Gliedes ergibt. Greifglieder nach der Erfindung sind nicht nur für Reifenschutzketten sondern auch für Geländeketten verwendbar. Der hier verwendete Begriff "Greifglied" soll keine Einschränkung auf die im Ausführungsbeispiel gezeigte äußere Form bedeuten, insbesondere kann das Glied in Draufsicht auch andere als Rechteckform aufweisen, z.B. quadratisch oder vieleckig sein.

Wenn in der Beschreibung von "Bohrungen 10" gesprochen wird, soll dies keine Einschränkung auf gerade, durch Bohren hergestellte Vertiefungen bedeuten. Der Begriff "Bohrungen" steht ganz allgemein für Vertiefungen, die auf jede hier sinnvolle Art hergestellt werden und auch einen gekrümmten, etwa dem Oberflächenverlauf der Stollen angepaßten Verlauf aufweisen können.

## Patentansprüche

1. Einteiliges Ketten-Greifglied für Reifenschutz- und/oder Geländeketten mit an der Bodenlaufseite vorgesehenen stollenartigen Erhebungen zur Verbesserung der Greifwirkung, dadurch gekennzeichnet, daß in einem Abstand von der Bodenlauffläche im Gliedkörper (1) seitlich offene, im wesentlichen parallel zur Bodenlauffläche in den Fußbereichen der Erhebungen verlaufende Bohrungen (10) vorgesehen sind.

2. Greifglied nach Anspruch 1, mit an der Bodenlaufseite vorgesehenen, quer zu dem Glied und in Abstand voneinander angeordneten Stollen, die vorzugsweise symmetrisch zur Längs- und Quermittelebene des Gliedes liegen, dadurch gekennzeichnet, daß die Bohrungen (10) in Richtung der Stollen (6) verlaufend in deren Fußbereich liegen.

3. Greifglied nach Anspruch 2, dadurch gekennzeichnet, daß die Bohrungen Sackbohrungen (10) sind und daß jedem Stollen (6) zwei Sackbohrungen (10) zugeordnet sind.

4. Greifglied nach Anspruch 2 oder 3, dadurch gekennzeichnet, daß die Bohrungen (10) im wesentlichen elliptischen Querschnitt aufweisen.

5. Greifglied nach Anspruch 4, dadurch gekennzeichnet, daß bei den Bohrungen (10), welche den mittleren Stollen (6) zugeordnet sind, die Hauptachsen des elliptischen Querschnitts annähernd senkrecht zu den Bodenlaufflächen (8) der Stollen (6) verlaufen und die entsprechenden Achsen der den beiden äußeren Stollen (6) zugeordneten Bohrungen (10) nach außen, z.B. um 30°, geneigt sind.

6. Greifglied nach einem der Ansprüche 2 bis 5, dadurch gekennzeichnet, daß zwischen den Stollen (6) ein Längssteg (7) vorgesehen ist.

## Claims

1. A one-piece chain grip link for tire protection and/or cross-country chains comprising stud-like projections provided on the ground contact side to improve gripping capacity, characterized in that lateral open bores (10) extending substantially parallel to the ground contact surface at the feet of the projections are provided in the link body (1) at a distance from the ground contact surface.

2. The grip link according to claim 1, comprising studs provided on the ground contact surface transversely to the links and at a distance from one another, said studs extending preferably symmetrically to the longitudinal and transverse center planes of the link, characterized in that the bores (10) extend in the direction of the studs (6) at the feet thereof.

3. The grip link according to claim 2, characterized in that the bores are blind-end bores (10) and that two blind-end bores (10) are assigned to each stud (6).

4. The grip link according to claim 2 or 3, characterized in that the bores (10) have a substantially elliptical cross section.

5. The grip link according to claim 4, characterized in that the major axes of the elliptical cross section of the bores (10) which are assigned to the central studes (6) extend approximately perpendicularly to the ground contact surfaces (8) of the studs (6), and that the respective axes of the bores (10) which are assigned to the two outer studs (6) are outwardly inclined, e.g. by 30°.

6. The grip link according to one of the claims 2 to 5, characterized in that a longitudinal web (7) is provided between the studs (6).

## Revendications

1. Elément monobloc d'accrochage pour des chaînes de protection de pneumatiques et/ou des chaînes tout-terrain, comportant des renflements en forme de crampons, prévus sur la surface de roulement sur le sol et servant à améliorer l'action d'accrochage, caractérisé en ce qu'il est prévu dans le corps (1) de l'élément d'accrochage, à distance de la surface de roulement sur le sol, des trous latéraux ouverts (10), sensiblement parallèles à la surface de roulement sur le sol et ménagés dans les zones des bases des renflements.

2. Elément d'accrochage selon la revendication 1, comportant des crampons prévus sur la surface de roulement sur le sol, disposés transversalement par rapport à l'élément et distants les uns des autres, en étant de préférence disposés symétriquement par rapport au plan médian longitudinal et au plan médian transversal de l'élément, caractérisé en ce que les trous (10) s'étendent dans la direction des crampons (6), dans la zone de la base de ces derniers.

3. Elément d'accrochage selon la revendication 2, caractérisé en ce que les trous sont des trous borgnes (10) et que deux trous borgnes (10) sont associés à chaque crampon (6).

4. Elément d'accrochage selon la revendication 2 ou 3, caractérisé en ce que les trous (10) possèdent une section transversale sensiblement elliptique.

5. Elément d'accrochage selon la revendication 4, caractérisé en ce que, en ce qui concerne les trous (10) associés aux crampons médians (6), les axes principaux de la section transversale elliptique sont approximativement perpendiculaires aux surfaces (8) de roulement sur le sol des crampons (6) et que les axes correspondants des trous (10) associés aux deux crampons extérieurs (6) sont inclinés vers l'extérieur, par exemple de 30°.

6. Elément d'accrochage selon l'une des revendications 2 à 5, caractérisé en ce qu'une barrette longitudinale (7) est prévue entre les crampons (6).

Fig. 1

Fig. 2

Fig. 3

Fig. 4

Fig. 5